# EUROPÄISCHE PATENTSCHRIFT

(11) **EP 3 087 511 B1**
(45) Veröffentlichungstag und Bekanntmachung des Hinweises auf die Patenterteilung: **24.03.2021**
(21) Anmeldenummer: 14821511.4
(22) Anmeldetag: 18.12.2014
(51) Int. Cl.: G06F 16/00

(54) **VERFAHREN ZUR ANZEIGE EINER GERÄTEINFORMATION UND ANZEIGEVORRICHTUNG HIERFÜR**
METHOD FOR DISPLAYING AN APPARATUS INFORMATION AND DISPLAY DEVICE THEREFOR
PROCÉDÉ POUR AFFICHER DES INFORMATIONS CONCERNANT DES APPAREILS ET DISPOSITIF D'AFFICHAGE APPROPRIÉ

(30) Priorität: 23.12.2013 DE 102013021794; 09.05.2014 DE 102014006701
(43) Veröffentlichungstag der Anmeldung: 02.11.2016
(73) Patentinhaber: SEW-EURODRIVE GmbH & Co. KG, 76646 Bruchsal (DE)
(72) Erfinder: REICHLE, Robert, 76297 Stutensee (DE); GAUL, Manfred, 76709 Kronau (DE); REINHARDT, Daniel, 71263 Weil der Stadt (DE); NICKLIS, Stephan, 64372 Ober-Ramstadt (DE); NISSEL, Desiree, 68794 Oberhausen-Reinhausen (DE); SCHNEIDER, Stephan, 76646 Bruchsal (DE); PFETZING, Rima, 76646 Bruchsal (DE); SCHILLING, Anne, 76137 Karlsruhe (DE); HORNUNG, Christian, 76461 Muggensturm (DE)
(86) Internationale Anmeldenummer: PCT/EP2014/003428
(87) Internationale Veröffentlichungsnummer: WO 2015/096897

(56) Entgegenhaltungen:
- DE-A1- 10 161 114
- US-A1- 2003 056 199
- US-A1- 2012 198 382
- US-A1- 2013 307 854
- US-B1- 7 203 701

## Beschreibung

Die Erfindung betrifft ein Verfahren zur Anzeige einer Geräteinformation und eine Anzeigevorrichtung.

Es ist bekannt, Geräteinformationen von Anlagen in Leitwarten zusammenzuführen und anzuzeigen. Hierbei ist es üblich, an einer Leitwarte eine schematische Darstellung der überwachten Anlage abzubilden und Geräteinformationen wie Statusmeldungen, Befehlsbestätigungen, Fehlermeldungen und dergleichen mehr an der Leitwarte dem jeweiligen Teil der Anlage, auf welchen sich die Geräteinformation bezieht, zugeordnet anzuzeigen. Bei komplexen Anlagen werden hierzu sehr große Leitwarten verwendet. Diese Leitwarten sind in der Regel strukturiert, indem einzelne Teile der Anlage zu Gruppen, Untergruppen und dergleichen zusammengefasst sind.

Aus US 2003/0056199 A1 ist eine hyperbolische Baum-Anzeige eines Computersystems, das Daten überwacht und analysiert, bekannt, wobei Echtzeitinformation innerhalb jedes individuellen hyperbolischen Baumes navigiert und inspiziert wird und zwischen semantisch verknüpften hyperbolischen Bäumen navigiert wird.

Aus US 2012/0198382 A1 ist eine automatische grafische Wiedergabe von komplexen Prozessen bekannt, speziell wird hierbei ein Fokusdiagramm in Echtzeit überprüft.

Aus der US 7,203,701 B1 sind ein Verfahren und ein System für eine Schnittstelle zur Ermöglichung einer Navigation und einer Visualisierung eines direkten Graphen bekannt. Der Graph weist dabei eine Mehrzahl von Knoten auf.

Aus der DE 101 61 114 A1 sind ein System und ein Verfahren zur Modellierung und Realisierung von Geschäftsprozessen bekannt. Dabei können Prozesse unabhängig voneinander auf mehrere Rechner aufgeteilt werden, und sie kommunizieren miteinander asynchron.

Der Erfindung liegt die Aufgabe zugrunde, die technischen Voraussetzungen für eine Überwachung und Steuerung einer Anlage zu vereinfachen.

Zur Lösung dieser Aufgabe werden bei der Erfindung eines Verfahrens die Merkmale von Anspruch 1, bei der Erfindung einer Anzeigevorrichtung die Merkmale von Anspruch 5 vorgeschlager Vorteilhafte Ausgestaltungen der Erfindung sind den abhängigen Ansprüchen zu entnehmen.

Wichtige Merkmale der Erfindung eines Verfahrens zur Anzeige einer Geräteinformation in einem Navigationsbaum sind, dass der Navigationsbaum Knoten aufweist, die durch gerichtete Links miteinander verknüpft sind, wobei durch die gerichteten Links eine Ordnungsstruktur definiert ist, welche zu jedem Knoten übergeordnete Knoten und untergeordnete Knoten auszeichnet, wobei durch die Ordnungsstruktur zu jedem Knoten ein zugeordneter Navigationspfad definiert ist, welcher alle übergeordneten Knoten zu diesem Knoten und die jeweils verknüpfenden Links enthält, wobei der Navigationsbaum einen Startknoten aufweist, zu welchem kein übergeordneter Knoten existiert und zu welchem die übrigen Knoten des Navigationsbaums untergeordnet sind und wobei jedem Knoten ein Geräteteil, ein Gerät oder eine Gerätegruppe einer Anlage zugeordnet ist, die jeweils Geräteinformationen absetzen, wobei die Anlage eine Fertigungsanlage, eine Reinigungsanlage, eine Sortieranlage, eine Förderanlage, eine Verarbeitungsanlage oder eine sonstige industrielle Anlage mit Antriebstechnik und/oder mit elektronischen Mess-, Steuer- und/oder Regeleinheiten ist, wobei die Geräteinformationen wenigstens eine Fehlermeldung, eine Befehlsbestätigung oder eine Statusänderungsmeldung umfassen, und wobei ein Knoten als angewählter Knoten mit dem zugehörigen Navigationspfad als erster Navigationspfad und den zu dem Knoten direkt untergeordneten Knoten an einem Anzeigegerät darstellbar ist, wobei ein Knoten mit einem Anwahlmittel angewählt und als angewählter Knoten mit dem zugehörigen ersten Navigationspfad und den zu dem Knoten direkt untergeordneten Knoten am Anzeigegerät dargestellt wird, dass zu einer von einem Geräteteil, einem Gerät oder einer Gerätegruppe abgesetzten Geräteinformation automatisch der zugehörige Knoten identifiziert wird, dass zu dem identifizierten Knoten ein zugehöriger Navigationspfad als zweiter Navigationspfad automatisch ermittelt wird, der den identifizierten Knoten mit dem Startknoten des ersten Navigationspfad verbindet, wobei der zweite Navigationspfad dadurch ermittelt wird, dass rekursiv ein jeweils direkt übergeordneter Knoten automatisch aufgesucht und als Element des zweiten Navigationspfads notiert wird, dass ein Knoten in dem zweiten Navigationspfad automatisch ermittelt wird, welcher momentan am Anzeigegerät dargestellt ist, wobei als ermittelter Knoten derjenige Knoten des zweiten Navigationspfads ermittelt wird, zu welchem kein untergeordneter Knoten im zweiten Navigationspfad momentan dargestellt wird, und dass die Geräteinformation durch eine Informationsausgabeeinrichtung automatisch an der bisher dargestellten Stelle gelöscht und einem neu ermittelten Knoten zugeordnet am Anzeigegerät angezeigt wird, wobei bei einem Wechsel des angewählten Knotens am Anzeigegerät erneut ein Knoten in dem zweiten Navigationspfad automatisch ermittelt wird, welcher momentan am Anzeigegerät dargestellt ist, und wobei die Geräteinformation automatisch an dem erneut ermittelten Knoten am Anzeigegerät dargestellt wird.

Somit ist eine kompakte Leitwarte ausbildbar, bei welcher nicht zu jedem Zeitpunkt jede Einzelheit der Anlage abgebildet sein muss. Somit wird dem Benutzer die Navigation im Navigationsbaum durch die platzierte Anzeige dieser Geräteinformation im Navigationsbaum erleichtert. Hierbei wird er durch die Platzierung der Geräteinformation geführt. Große Leitwarten sind verzichtbar, und die Geräteinformation ist dennoch in inhaltlich sinnvoller Zuordnung darstellbar.

Von Vorteil ist weiter, dass die Übersichtlichkeit verbessert ist. Somit ist die Position des angewählten Knotens innerhalb der Anlagenhierarchie in einfacher Weise erkennbar.

Dabei ist die Anlage eine Fertigungsanlage, eine Reinigungsanlage, eine Sortieranlage, eine Förderanlage, eine Verarbeitungsanlage oder eine sonstige industrielle Anlage mit Antriebstechnik und/oder mit elektronischen Mess-, Steuer- und/oder Regeleinheiten.

Bevorzugt umfasst die Menge der Geräte der Anlage wenigstens Antriebseinheiten, Getriebeeinheiten, elektronische Steuereinheiten, Umrichter, Sensoreinheiten, Stelleinheiten und/oder sonstige, vorzugsweise elektronisch ansteuerbare und/oder überwachbare Geräte. Die Geräteteile sind beispielsweise als Komponenten dieser Geräte, beispielsweise Steuerkarten, Elektronikmodule und/oder mechanische, hydraulische, pneumatische und/oder chemische Module, ausführbar. Die Gerätegruppen sind beispielsweise durch ein Zusammenwirken, durch zusammenhängende oder identische Funktionen, durch einen gemeinsamen Aufstellungsort oder durch sonstige Zugehörigkeiten der umfassten Geräte bildbar.

Dabei ist vorgesehen, dass als ermittelter Knoten derjenige Knoten des zweiten Navigationspfads ermittelt wird, zu welchem kein untergeordneter Knoten im zweiten Navigationspfad momentan dargestellt wird. Von Vorteil ist dabei, dass eine für die Geräteinformation relevante Abzweigung des Navigationsbaums für einen Benutzer durch Anwahl dieses Knotens sichtbar machbar oder öffenbar ist.

Bei einer vorteilhaften Ausgestaltung der Erfindung ist vorgesehen, dass jeder Knoten genau oder höchstens einen direkt übergeordneten Knoten im Navigationsbaum hat. Von Vorteil ist dabei, dass ein Wechsel zu einer übergeordneten Hierarchieebene eindeutig ausführbar ist. Dies erleichtert eine Implementierung des Verfahrens in einem Computer, da zusätzliche Nebenbedingungen verzichtbar sind.

Dabei ist vorgesehen, dass der Navigationspfad dadurch ermittelt wird, dass rekursiv ein jeweils direkt übergeordneter Knoten automatisch aufgesucht und als Element des Navigationspfads notiert wird. Von Vorteil ist dabei, dass der Navigationspfad (auch Hierarchiepfad genannt) computerimplementiert, also ohne Zutun des Benutzers oder blind, aufbaubar ist. Die Navigationspfade zu jedem Knoten müssen daher nicht separat hinterlegt werden, sondern sind aus dem Navigationsbaum ableitbar.

Dabei ist vorgesehen, dass bei einem Wechsel des angewählten Knotens am Anzeigegerät erneut ein Knoten in dem zweiten Navigationspfad automatisch ermittelt wird, welcher momentan am Anzeigegerät dargestellt ist, und dass die Geräteinformation automatisch dem erneut ermittelten Knoten zugeordnet am Anzeigegerät dargestellt wird. Von Vorteil ist dabei, dass ein Mitwandern der Geräteinformation beim Navigieren im Navigationsbaum erreichbar ist. Somit ist der Benutzer mittels der Geräteinformation so lange führbar, bis der identifizierte Knoten erreicht ist. Die Erfindung bietet den Vorteil, dass dieser identifizierte Knoten anfänglich nicht dargestellt sein muss, sondern zur Vereinfachung der Darstellung ausblendbar ist, ohne dass die Geräteinformation verloren geht.

Bei einer vorteilhaften Ausgestaltung der Erfindung ist vorgesehen, dass die Geräteinformation an einem Link zu einem Knoten, der zu dem ermittelten Knoten direkt übergeordnet ist, angezeigt wird. Alternativ oder zusätzlich ist vorteilhafterweise vorgesehen, dass die Geräteinformation an dem ermittelten Knoten angezeigt wird. Von Vorteil ist dabei, dass die Geräteinformation dort einblendbar ist, wo sich der Benutzer beim Navigieren im Navigationsbaum orientiert. Es ist somit eine gute Platzausnutzung an der Anzeigeeinheit erreichbar.

Dabei ist vorgesehen, dass der Navigationsbaum einen Startknoten aufweist, zu welchem kein übergeordneter Knoten existiert und zu welchem die übrigen Knoten des Navigationsbaums untergeordnet sind. Von Vorteil ist dabei, dass ein natürlicher Ausgangspunkt für die Navigation bereitgestellt ist. Von Vorteil ist weiter, dass ein Ende des beschriebenen rekursiven Aufbaus des jeweiligen Navigationspfads einfach erkennbar ist, da alle Navigationspfade am Startknoten enden müssen.

Bei einer vorteilhaften Ausgestaltung der Erfindung ist vorgesehen, dass mit dem angewählten Knoten Auslesemittel zu einem Auslesen von Geräteparametern von dem/der zugeordneten Geräteteil, Gerät oder Gerätegruppe angezeigt werden. Vorzugsweise sind die Auslesemittel durch grafische Mittel gebildet, beispielsweise durch Masken, Fenster, Einblendungen etc. Von Vorteil ist dabei, dass aktuelle Informationen, Daten und Parameter von den Teilen der Anlage inhaltlich richtig zugeordnet präsentierbar sind.

Alternativ oder zusätzlich ist vorteilhafterweise vorgesehen, dass Ansteuermittel zu einem Ansteuern des/der zugeordneten Geräteteils, Geräts oder Gerätegruppe angezeigt werden. Vorzugsweise sind die Ansteuermittel durch grafische Mittel gebildet, beispielsweise durch Schaltflächen, Hyperlinks etc. Von Vorteil ist dabei, dass die Ansteuermittel dem jeweiligen Knoten leicht erfassbar zuordenbar sind. Dies erleichtert eine Bedienbarkeit durch ungeschultes Personal.

Bei einer vorteilhaften Ausgestaltung der Erfindung ist vorgesehen, dass zu jedem dargestellten, nicht angewählten Knoten höchstens zwei direkt unter- oder übergeordnete Knoten dargestellt werden. Von Vorteil ist dabei, dass Abzweigungen im Navigationsbaum für die Darstellung an der Anzeigeeinheit ausblendbar und/oder unterdrückbar sind. Am Startknoten und an den direkt untergeordneten Knoten zu dem jeweils angewählten Knoten wird bevorzugt jeweils nur ein Link dargestellt. Zu einem Knoten direkt unter- oder übergeordnete Knoten sind also Knoten charakterisierbar, die mit dem zuerst genannten Knoten über genau einen Link verknüpft sind, ohne dass also ein weiterer Knoten dazwischen angeordnet ist.

Wichtige Merkmale der Erfindung einer Anzeigevorrichtung für Geräteinformationen, mit einer Speichereinrichtung, in welcher ein Navigationsbaum hinterlegt ist, sind, dass der Navigationsbaum Knoten aufweist, die durch gerichtete Links miteinander verknüpft sind, wobei durch die gerichteten Links eine Ordnungsstruktur definiert ist, welche zu jedem Knoten übergeordnete Knoten und untergeordnete Knoten auszeichnet, wobei durch die Ordnungsstruktur zu jedem Knoten ein zugeordneter Navigationspfad definiert ist, welcher alle übergeordneten Knoten zu diesem Knoten und die jeweils verknüpfenden Links enthält, wobei der Navigationsbaum einen Startknoten aufweist, zu welchem kein übergeordneter Knoten existiert und zu welchem die übrigen Knoten des Navigationsbaums untergeordnet sind und wobei jedem Knoten ein Geräteteil, ein Gerät oder eine Gerätegruppe einer Anlage zugeordnet ist, die jeweils Geräteinformationen absetzen, wobei die Anlage eine Fertigungsanlage, eine Reinigungsanlage, eine Sortieranlage, eine Förderanlage, eine Verarbeitungsanlage oder eine sonstige industrielle Anlage mit Antriebstechnik und/oder mit elektronischen Mess-, Steuer- und/oder Regeleinheiten ist, wobei die Geräteinformationen wenigstens eine Fehlermeldung, eine Befehlsbestätigung oder eine Statusänderungsmeldung umfassen, und wobei ein Anwahlmittel zu einem Anwählen eines an der Anzeigevorrichtung angezeigten Knotens eingerichtet ist und die Anzeigevorrichtung zur Anzeige eines angewählten Knotens des Navigationsbaums mit dem zugehörigen Navigationspfad als erster Navigationspfad und den zu dem Knoten direkt untergeordneten Knoten eingerichtet ist, dass ein Informationseingang ausgebildet ist, über welchen abgesetzte Geräteinformationen von dem Geräteteil, dem Gerät oder der Gerätegruppe empfangbar sind, dass eine Identifikationseinrichtung zur Identifizierung eines zu einer empfangenen Geräteinformation zugeordneten Knotens eingerichtet ist, dass eine Navigationspfadberechnungseinrichtung zur Ermittlung des Navigationspfads zu einem identifizierten Knoten als zweiter Navigationspfad eingerichtet ist, der den identifizierten Knoten mit dem Startknoten des ersten Navigationspfad verbindet, wobei die Navigationspfadberechnungseinrichtung ausgehend von dem identifizierten Knoten zu einer rekursiven automatischen Ermittlung eines zu einem Knoten jeweils direkt übergeordneten Knotens und zu einer Notierung des übergeordneten Knotens als Element des zweiten Navigationspfads eingerichtet ist, dass eine Knotenauswahleinrichtung zur Ermittlung eines Knotens im zweiten Navigationspfad zu dem identifizierten Knoten, der gleichzeitig auch momentan am Anzeigegerät dargestellt ist, wobei als ermittelter Knoten derjenige Knoten des zweiten Navigationspfads ermittelt wird, zu welchem kein untergeordneter Knoten im zweiten Navigationspfad momentan dargestellt wird, eingerichtet ist und dass eine Informationsausgabeeinrichtung zum Löschen der Geräteinformation an der bisher dargestellten Stelle und zur Anzeige der Geräteinformation mit dem ermittelten Knoten am Anzeigegerät eingerichtet ist, wobei die Anzeigevorrichtung zur erneuten automatischen Ermittlung eines momentan am Anzeigegerät dargestellten Knotens im Navigationspfad des identifizierten Knotens bei einem Wechsel des angewählten Knotens am Anzeigegerät und zu einer dem erneut ermittelten Knoten zugeordneten Darstellung der Geräteinformation eingerichtet ist, und wobei die Anzeigevorrichtung zur automatischen Darstellung der Geräteinformation an dem neu ermittelten Knoten eingerichtet ist.

Von Vorteil ist dabei, dass eine computerimplementierte Unterstützung einer ortsrichtigen Anzeige von Geräteinformationen ermöglicht ist. Für den Benutzer ist somit sofort erkennbar, welcher Teil einer Anlage von der Geräteinformation betroffen ist. Das Anzeigegerät ist somit viel kleiner als beispielsweise eine Leitwarte ausbildbar. Für viele Zwecke reicht ein PC- oder Laptop- oder Netbook- oder Tablet-PC-Display als Anzeigegerät aus. Die Anwahlmittel sind beispielweise durch ein Zeigegerät, ein berühr- und/oder lichtempfindliches Display oder auf andere Weise ausbildbar.

Vorteilhafterweise folgt der Benutzer dem virtuellen Navigationspfad in der realen Anlage und gelangt so in einfacher Weise zur Quelle der Geräteinformation. Hierzu ist das Verfahren auf einem tragbaren Computer, beispielsweise einem Smartphone, einem Tablet-PC, einem Netbook oder einem Laptop, ausführbar. Somit ist ein Navigationspfad aktualisierbar, während der Benutzer die Quelle der Geräteinformation aufsucht. Besonders günstig ist es, wenn der tragbare Computer zur Ermittlung eines aktuellen Standortes in der realen Anlage eingerichtet ist. Von Vorteil ist dabei, dass ein Abgleich mit einer Anzeige des angewählten Knotens und/oder einer Anzeige des Navigationspfads automatisiert ausführbar ist. Es ist somit erreichbar, dass automatisiert eine Bewegung des Benutzers zu der Quelle der Geräteinformation synchron durch Veränderung einer Anzeige des Navigationspfads abbildbar ist. Eine Orientierung des Benutzers in unübersichtlichen Anlagen ist somit unterstützbar, beispielsweise durch computergenerierte Navigationsanweisungen.

Dabei ist vorgesehen, dass eine Knotenauswahleinrichtung zur Ermittlung desjenigen Knotens im Navigationspfad zu dem identifizierten Knoten, zu welchem kein untergeordneter Knoten in diesem Navigationspfad momentan dargestellt wird, eingerichtet ist. Von Vorteil ist dabei, dass automatisch derjenige Knoten auswählbar ist und ausgewählt wird, an welchem die durch die Geräteinformation gegebene Route zu dem identifizierten Knoten von dem momentan dargestellten Pfad abzweigt.

Bei einer vorteilhaften Ausgestaltung der Erfindung ist vorgesehen, dass jeder Knoten genau oder höchstens einen direkt übergeordneten Knoten im Navigationsbaum hat. Von Vorteil ist dabei, dass das beschriebene Rekursionsverfahren zum Aufbau des Navigationspfads computerimplementiert, also automatisch, ausführbar ist.

Dabei ist vorgesehen, dass die Navigationspfadberechnungseinrichtung zu einer rekursiven automatischen Ermittlung eines zu einem Knoten jeweils direkt übergeordneten Knotens und zu einer Notierung des übergeordneten Knotens als Element des Navigationspfads eingerichtet ist. Von Vorteil ist dabei, dass eine Verbindung zu einem Startknoten automatisch ermittelbar ist, ohne dass ein Benutzer eingreifen muss. Somit ist in einfacher Art und Weise eine Überschneidung zwischen einem ersten Navigationspfad, der momentan am Anzeigegerät dargestellt wird, mit einem zweiten Navigationspfad, welcher zu der Geräteinformation gehört, berechenbar.

Dabei ist vorgesehen, dass die Anzeigevorrichtung zur erneuten automatischen Ermittlung eines momentan am Anzeigegerät dargestellten Knotens im Navigationspfad des identifizierten Knotens bei einem Wechsel des angewählten Knotens am Anzeigegerät und zu einer dem erneut ermittelten Knoten zugeordneten Darstellung der Geräteinformation eingerichtet ist. Von Vorteil ist dabei, dass eine ständige Aktualisierung ausführbar ist. Somit ist die Geräteinformation mit der Navigation mitführbar.

Bei einer vorteilhaften Ausgestaltung der Erfindung ist vorgesehen, dass die Anzeigevorrichtung zur Darstellung der Geräteinformation an einem Link zu einem Knoten, der zu dem ermittelten Knoten direkt übergeordnet ist, eingerichtet ist. Alternativ oder zusätzlich ist vorteilhafterweise vorgesehen, dass die Anzeigevorrichtung zur Darstellung der Geräteinformation an dem ermittelten Knoten eingerichtet ist. Von Vorteil ist dabei, dass die Geräteinformation direkt zur Führung des Benutzers bei der Navigation verwendbar ist.

Bei einer vorteilhaften Ausgestaltung der Erfindung ist vorgesehen, dass der Navigationsbaum einen Startknoten aufweist, zu welchem kein übergeordneter Knoten existiert und zu welchem die übrigen Knoten des Navigationsbaums untergeordnet sind.

Somit ist zu jedem Knoten jeweils ein Navigationspfad aufbaubar, der am Startknoten endet. Der Fall, dass zwei aufgebaute Navigationspfade keinen gemeinsamen Knoten aufweisen, ist somit vermeidbar.

Bei einer vorteilhaften Ausgestaltung der Erfindung ist vorgesehen, dass die Anzeigevorrichtung zur Anzeige eines Auslesemittels zu einem Auslesen von Geräteparametern von dem/der zugeordneten Geräteteil, Gerät oder Gerätegruppe mit dem angewählten Knoten eingerichtet ist. Hierzu ist die Anzeigeeinheit mit einer entsprechend eingerichteten Ansteuerungseinrichtung ausrüstbar. Von Vorteil ist dabei, dass ein Status eines durch den angewählten Knoten repräsentierten Teils der Anlage abrufbar und anzeigbar ist. Somit ist das erfindungsgemäße Verfahren als Teilschritt in einem Verfahren zum Auslesen eines Geräteteils, eines Geräts und/oder einer Gerätegruppe als Anwendung der Erfindung einsetzbar. Bevorzugt ist das Auslesemittel als grafisches Auslesemittel, beispielsweise als Maske, Tabelle, Grafik etc. ausgebildet.

Alternativ oder zusätzlich ist vorteilhafterweise vorgesehen, dass die Anzeigevorrichtung zur Anzeige eines Ansteuermittels zu einem Ansteuern des/der zugeordneten Geräteteils, Gerätes oder Gerätegruppe eingerichtet ist. Hierzu ist die Anzeigeeinheit mit einer entsprechend eingerichteten Ansteuerungseinrichtung ausrüstbar. Von Vorteil ist dabei, dass eine Bedienung eines durch den angewählten Knoten repräsentierten Teils der Anlage über das Anzeigemittel ausführbar ist, insbesondere in Reaktion auf die Geräteinformation. Bevorzugt ist das Ansteuermittel als grafisches Ansteuermittel, beispielsweise als Maske, Tabelle, Grafik, Anordnung von Schaltflächen etc. ausgebildet.

Bei einer vorteilhaften Ausgestaltung der Erfindung ist vorgesehen, dass der Navigationsbaum einen Startknoten aufweist, zu welchem kein übergeordneter Knoten existiert und zu welchem die übrigen Knoten des Navigationsbaums untergeordnet sind. Von Vorteil ist dabei, dass ein Bezugspunkt für den Navigationsbaum einrichtbar ist. Durch das Erreichen des Startpunkts ist auch ein Abbruchkriterium eines rekursiven Aufbaus eines Navigationsbaums definierbar.

Bei einer vorteilhaften Ausgestaltung der Erfindung ist vorgesehen, dass die Anzeigevorrichtung zur Darstellung von höchstens zwei direkt unter- oder übergeordneten Knoten zu jedem dargestellten, nicht angewählten Knoten eingerichtet ist. Bevorzugt sind die Anzeigevorrichtung und insbesondere eine zugeordnete Ansteuerungseinrichtung zur Auswahl der momentan darzustellenden Knoten und Links bzw. zur Ausblendung oder Eliminierung der momentan nicht darzustellenden Knoten und Links eingerichtet. Von Vorteil ist dabei, dass der Navigationsbaum für eine Darstellung einfach automatisch vereinfachbar ist.

Vorteilhafterweise ist die Geräteinformation beispielsweise eine Statusmeldung, eine Befehlsbestätigung, eine Fehlermeldung, eine Handlungsanweisung und/oder eine sonstige gerätebezogene Information.

Vorteilhafterweise erfolgt die Anzeige der Geräteinformation als Markierung eines Links und/oder eines Knotens beziehungsweise ist dazu eingerichtet. Hierbei ist vorteilhafterweise vorgesehen, dass der zugehörige Knoten und/oder Link automatisch vergrößert dargestellt ist bzw. vergrößert wird. Dies ermöglicht es, die Geräteinformation einfacher zu erkennen und/oder zusätzliche Daten, Parameter und/oder Informationen anzubieten.

Besonders günstig ist es, wenn das erfindungsgemäße Verfahren, insbesondere wie bereits beschrieben und/oder nach einem der auf ein Verfahren gerichteten Schutzansprüche, mit einer erfindungsgemäßen Anzeigevorrichtung, insbesondere wie bereits beschrieben und/oder nach einem der auf eine Anzeigevorrichtung gerichteten Schutzansprüche, verwendet wird. Alternativ oder zusätzlich ist vorteilhafterweise vorgesehen, dass die erfindungsgemäße Anzeigevorrichtung Mittel zur Ausführung eines erfindungsgemäßen Verfahrens, insbesondere wie zuvor beschrieben und/oder nach einem der auf ein Verfahren gerichteten Ansprüche, aufweist. Diese Mittel können beispielsweise Prüfmittel aufweisen oder bereitstellen, welche zur Ermittlung von übereinstimmenden Knoten in zwei oder mehr Navigationspfaden eingerichtet sind. Somit ist einfach automatisch ermittelbar, an welchem Knoten eine Geräteinformation, die sich auf einen Knoten in einem nicht vollständig dargestellten Knoten bezieht, anzeigbar ist.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder mit einzelnen oder mehreren Merkmalen des Ausführungsbeispiels, insbesondere bei der Lösung einer sich aus dem Stand der Technik stellenden Aufgabe.

Es zeigt:
Figur 1 eine erfindungsgemäße Anzeigevorrichtung in stark vereinfachter Darstellung,
Figur 2 eine Darstellung einer Geräteinformation in einem Teil eines Navigationsbaums bei einem erfindungsgemäßen Verfahren,
Figur 3 eine weitere Darstellung einer Geräteinformation in einem anderen Teil eines Navigationsbaums bei einem erfindungsgemäßen Verfahren und
Figur 4 eine weitere Darstellung einer Geräteinformation in einem dritten Teil eines Navigationsbaums bei einem erfindungsgemäßen Verfahren.

Eine im Ganzen mit 1 bezeichnete erfindungsgemäße Anzeigevorrichtung ist zur Anzeige einer Geräteinformation 2 wie folgt eingerichtet.

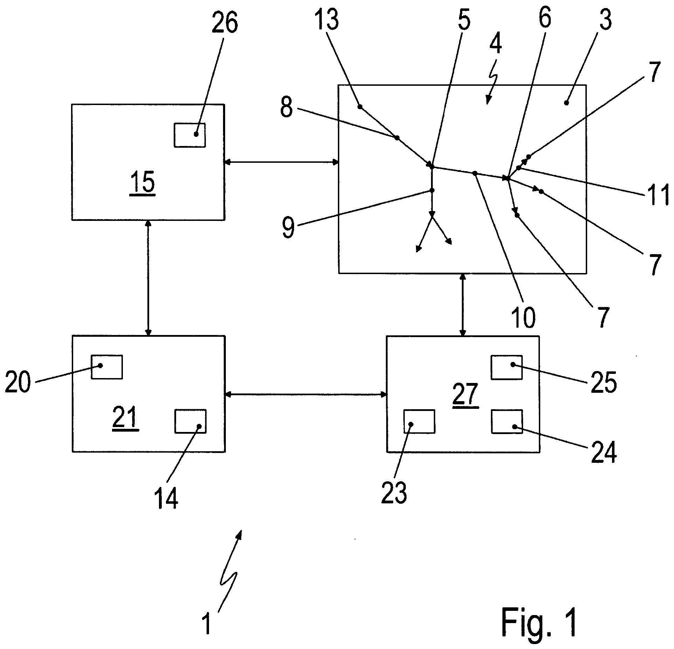

Die Anzeigevorrichtung 1 gemäß Figur 1 hat eine Speichereinrichtung 3, in welcher ein Navigationsbaum 4 hinterlegt und bereitgestellt ist.

Unter einem Navigationsbaum wird hierbei eine hierarchische Datenstruktur verstanden, die mittels der Anzeigevorrichtung zumindest ausschnittsweise darstellbar ist. Eine Hierarchie ist beispielsweise durch eine Richtung der Links zwischen den Knoten abbildbar.

Die Geräteinformation 2 ist beispielsweise eine Fehlermeldung, ein Warnhinweis, eine Befehlsbestätigung oder eine Statusänderungsmeldung. Vorzugsweise ist die Geräteinformation 2 als Symbol im Navigationsbaum 4 darstellbar. Vorzugsweise ist jeder Art von Geräteinformation ein eigenes Symbol zugeordnet.

Der Navigationsbaum 4 hat Knoten 5, 6, 7, die jeweils einem Geräteteil, einem Gerät oder einer Gerätegruppe 16, hier beispielhaft ein Motor, einer Anlage (nicht weiter dargestellt) zugeordnet sind. Der Navigationsbaum 4 hat noch weitere Knoten und Links, die hier zur Vereinfachung nicht bezeichnet oder sogar nicht dargestellt sind.

Beispielsweise ist der Knoten 5 einer Gerätegruppe zugeordnet, während der Knoten 6 einem Gerät aus dieser Gerätegruppe und der Knoten 7 einem Geräteteil dieses Geräts zugeordnet ist.

Die Knoten 5, 6, 7 sind paarweise miteinander durch Links 8, 9, 10, 11 verknüpft. Die Links 8, 9, 10, 11 sind gerichtet und definieren durch die Richtung untergeordnete und übergeordnete Knoten 5, 6, 7. Beispielsweise ist der Knoten 5 übergeordnet zu dem Knoten 6. Beispielsweise sind die Knoten 7 jeweils untergeordnet zu dem Knoten 6. Der Knoten 6 ist dagegen zu dem Knoten 5 untergeordnet.

Es ist ersichtlich, dass zu jedem Knoten 5, 6, 7 jeweils genau ein übergeordneter Knoten 5, 6, 7 existiert. Dagegen sind zu einem Knoten 5, 6, 7 mehrere untergeordnete Knoten 5, 6, 7 möglich. So hat der Knoten 6 drei untergeordnete Knoten 7.

Die Folge der übergeordneten Knoten 5, 6 zu einem Knoten 7 definiert einen Navigationspfad 12. Der Navigationspfad 12 ist abzweigungsfrei und endet immer an einem Startknoten 13.

Ein einem anderen Knoten 7 übergeordneter Knoten 5, 6 ist also hierarchisch zwischen dem anderen Knoten 7 und dem Startknoten 13 angeordnet.

Die Knoten 5, 6, 7 sind mit einem Anwahlmittel 14 anwählbar. Das Anwahlmittel 14 ist Bestandteil eines Eingabemittels 21, welches zur Unterstützung des Anwählens einen Zeiger 20 bereitstellt, mittels dessen an dem Anzeigegerät 15 auf Bildschirminhalte zeigbar ist.

Vorzugsweise ist das Eingabemittel 21 als eine Computermaus, ein Touchpad oder ein Trackball ausgeführt.

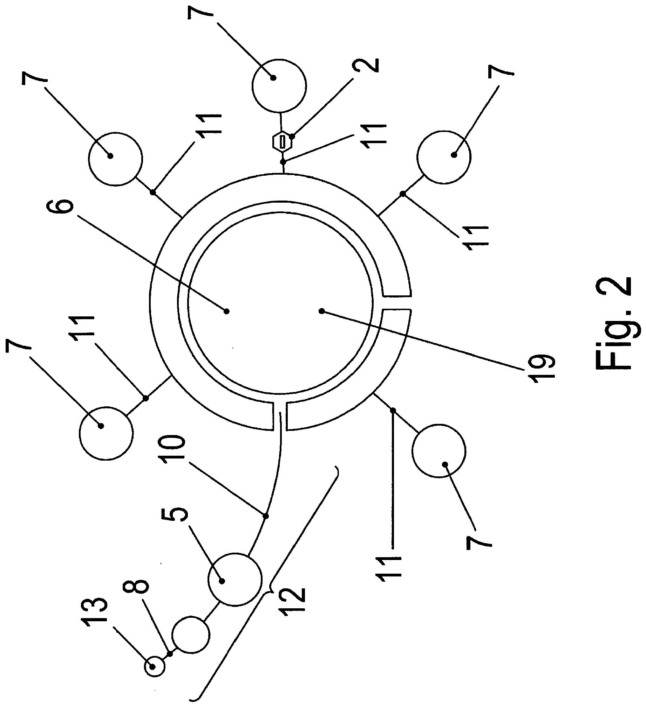

Nach dem Anwählen eines Knotens 6 ergibt sich beispielhaft die Situation aus Figur 2. Dargestellt ist die Anzeige des angewählten Knotens 6 an dem Anzeigegerät 15.

Der angewählte Knoten 6 wird mit seinem zugehörigen Navigationspfad 12 und den ihm untergeordneten Knoten 7 und den jeweils zugehörigen Links 8, 10, 11 angezeigt. Der Link 9 gehört nicht zum Navigationspfad 12 und wird daher an dem Anzeigegerät 15 nicht angezeigt.

Die untergeordneten Knoten 7 zu dem angewählten Knoten 6 werden reduziert dargestellt. So werden zu diesen Knoten 7 keine untergeordneten Knoten dargestellt, obwohl derartige Knoten im Navigationsbaum 4 möglich sind.

Eine Ansteuerungseinrichtung 27 hat einen Informationseingang 22, über welchen Geräteinformationen 2 von den Geräteteilen, Geräten und/oder Gerätegruppen 16 empfangen werden. Hierzu ist der Informationseingang 22 über ein nicht weiter dargestelltes Bussystem mit den Komponenten der Anlage verbindbar.

Setzt ein Geräteteil, ein Gerät und/oder eine Gerätegruppe 16 eine Geräteinformation 2 ab, so wird diese über den Informationseingang 22 eingelesen. Zunächst identifiziert eine Identifikationseinrichtung 23 einen Knoten 6, der zu dem Geräteteil, dem Gerät und/oder der Gerätegruppe 16 zugeordnet ist.

Zu diesem identifizierten Knoten 6 wird ein zweiter Navigationspfad berechnet, der den identifizierten Knoten 6 mit dem Startknoten 13 verbindet. Dies erfolgt computerimplementiert und also automatisch in einer Navigationspfadberechnungseinrichtung 24. Diese ermittelt zu dem identifizierten Knoten 6 den übergeordneten Knoten, zu diesem den wiederum übergeordneten Knoten und so fort immer weiter rekursiv, bis der Startknoten 13 erreicht ist. Die Gesamtheit der hierbei durchlaufenen Knoten bildet dann den zweiten Navigationspfad.

Der erste Navigationspfad 12 und der zweite Navigationspfad fallen abschnittweise zusammen. Eine computerimplementierte Knotenauswahleinrichtung 25 ermittelt denjenigen Knoten, zu welchem kein weiterer Knoten existiert, der sowohl zu dem identifizierten Knoten 6 dargestellt ist, als auch Bestandteil des zweiten Navigationspfads 12 ist. Die Knotenauswahleinrichtung 25 ist hierzu zur Ermittlung desjenigen Knotens 7 im zweiten Navigationspfad zu dem identifizierten Knoten, zu welchem kein untergeordneter Knoten im zweiten Navigationspfad momentan dargestellt wird, eingerichtet.

In Figur 2 ist beispielhaft die Situation gezeigt, in welcher der erste Navigationspfad 12 kürzer als der zweite Navigationspfad und vollständig in diesem enthalten ist. In anderen Situationen kommt der Fall vor, dass der erste Navigationspfad 12 länger als der zweite Navigationspfad ist und diesen vollständig enthält. Schließlich tritt auch der Fall auf, dass der zweite Navigationspfad vom ersten Navigationspfad 12 abzweigt. Dies wäre beispielsweise in Figur 1 der Fall, wenn der identifizierte Knoten der Knoten 6 und der angewählte Knoten derjenige Knoten, an welchem der Link 9 endet, ist.

Der ermittelte Knoten ist daher in Figur 2 derjenige Knoten 7, in welchem eine Geräteinformation 2 eingeblendet ist.

Die Ansteuerungseinrichtung 27 steuert nun eine Informationsausgabeeinrichtung 26 an, mit welcher die Geräteinformation 2 mit dem ermittelten Knoten 7, hier an dem zugehörigen Link 11 ausgegeben wird, der an dem ermittelten Knoten 7 endet.

Wird nun der Knoten 7, an welchem der Link 11 mit der Geräteinformation 2 endet, mit dem Anwahlmittel 14 angewählt, so wird dieser neu angewählte Knoten 7 mit seinen untergeordneten Knoten dargestellt. Der zuvor angewählte Knoten 6 wird automatisch auf die Darstellung im Navigationspfad 12 reduziert. Insbesondere werden zu diesem Knoten 6 die untergeordneten Knoten 7 mit Ausnahme des angewählten Knotens 7 ausgeblendet.

Da sich der dargestellte Teil des Navigationsbaums 4 somit verändert, wird die Darstellung aktualisiert. Hierzu wird erneut in der Knotenauswahleinrichtung 25 ein Knoten ermittelt, welcher im zweiten Navigationspfad liegt und welcher momentan dargestellt ist. Die Knotenauswahleinrichtung 25 ermittelt diesen Knoten so, dass zu diesem Knoten kein untergeordneter Knoten existiert, der diese Bedingungen ebenfalls erfüllt.

Die Informationsausgabeeinrichtung 26 löscht die Geräteinformation 2 an der bisher dargestellten Stelle und stellt diese an dem neu ermittelten Knoten - im Beispiel wieder am zugehörigen Link - dar.

In Figur 2 ist noch ein Ansteuermittel 19 ersichtlich, das in Form von Schaltflächen ausgebildet ist. Mit dem Ansteuermittel 19 ist/sind der zugehörige Geräteteil, das zugehörige Gerät und/oder die zugehörige Gerätegruppe 16 zu dem angewählten Knoten 6 ansteuerbar. Hierzu ist die Ansteuerungseinrichtung 27 über einer Steuerverbindung mit dem betreffenden Geräteteil, Gerät oder der betreffenden Gerätegruppe 16 verbunden, beispielsweise über den erwähnten oder einen weiteren Bus. Statt des Ansteuermittels 19 oder zusätzlich zu diesem sind bei einzelnen oder allen Knoten Informationen, die auf den zugehörigen Geräteteil, das zugehörige Gerät und/oder die zugehörige Gerätegruppe 16 bezogen sind, anzeigbar. Bei einem Ausführungsbeispiel sind Ansteuermittel 19 nur bei Knoten 5, 6, 7 ausgebildet, zu denen keine untergeordneten Knoten existieren.

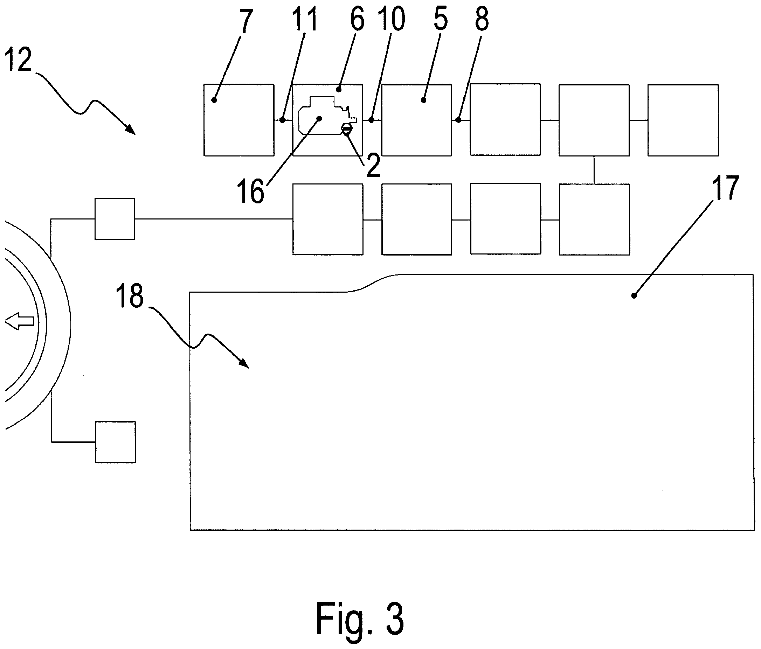

Figur 3 zeigt eine weitere mögliche Situation, die bei dem erfindungsgemäßen Verfahren möglich ist. Funktionell und/oder konstruktiv zu den vorangegangenen Figuren gleichartige oder identische Bauteile und Funktionseinheiten sind mit denselben Bezugszeichen bezeichnet und nicht noch einmal gesondert beschrieben. Die Ausführungen zu Figur 1 und 2 gelten daher hier entsprechend.

In Figur 3 ist der Knoten 6 angewählt, der einem Motor als Gerät 16 zugeordnet ist. Dieses Gerät 16 hat eine Geräteinformation 2, beispielsweise eine Fehlermeldung, abgesetzt. In der bereits beschriebenen Weise wird diese Geräteinformation 2 mit dem Knoten 6 angezeigt.

Zusätzlich werden mit einem Auslesemittel 17, hier eine Maske, Geräteparameter 18 und andere Gerätedaten des Geräts 16 (bzw. des Geräteteils, der Gerätegruppe) angezeigt.

Dem Benutzer ist somit ermöglicht, sich sofort einen Überblick über mögliche Ursachen für die Geräteinformation 2 und/oder über deren Bedeutung zu verschaffen.

In Figur 3 ist noch ersichtlich, dass im Navigationspfad 12 nicht alle Abzweigungen unterdrückt oder ausgeblendet sind. Dies ist ab einer bestimmten Hierarchiestufe nicht weiter erforderlich.

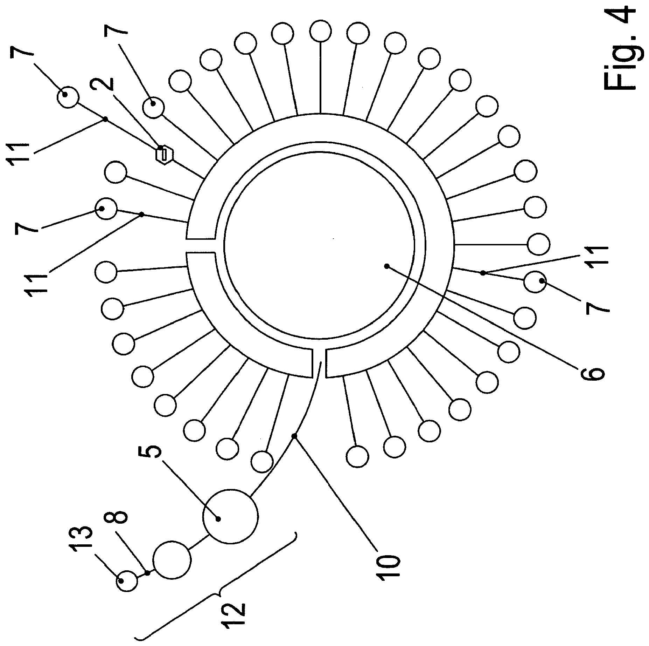

Figur 4 zeigt eine weitere mögliche Situation, die bei dem erfindungsgemäßen Verfahren möglich ist. Funktionell und/oder konstruktiv zu den vorangegangenen Figuren gleichartige oder identische Bauteile und Funktionseinheiten sind mit denselben Bezugszeichen bezeichnet und nicht noch einmal gesondert beschrieben. Die Ausführungen zu Figur 1 bis 3 gelten daher hier entsprechend.

Bei Figur 4 weist der angewählte Knoten 6 so viele untergeordnete Knoten 7 auf (hier beispielhaft vierunddreißig), so dass diese Knoten 7 nur in einer knappen, sehr reduzierten und verkleinerten Anzeigeform darstellbar sind.

Wieder wird in der beschriebenen Weise ein Knoten 7 ermittelt, mit welchem die Geräteinformation 2 dargestellt wird.

Das Ausführungsbeispiel unterscheidet sich von den vorangegangenen Ausführungsbeispielen dadurch, dass zusätzlich zur der Darstellung der Geräteinformation 2 der Knoten 7 gegenüber den übrigen zu dem Knoten 6 untergeordneten Knoten vergrößert dargestellt wird. Dies bewirkt die Informationsausgabeeinrichtung 26 oder ein anderer Teil der Ansteuerungseinrichtung 27 automatisch mit.

Bei der Anzeigevorrichtung 1 wird vorgeschlagen, eine Geräteinformation 2 in einem Navigationsbaum 4, dessen Knoten 5, 6, 7, 13 jeweils Geräteteilen, Geräten und/oder Gerätegruppen 16 zugeordnet sind, so darzustellen, dass die Geräteinformation 2 mit einem Knoten, der sowohl zu dem Knoten, der einer Quelle der Geräteinformation 2 zugeordnet ist, als auch zu einem momentan angewählten Knoten 6 übergeordnet ist.

### Bezugszeichenliste

- 1: Anzeigevorrichtung
- 2: Geräteinformation
- 3: Speichereinrichtung
- 4: Navigationsbaum
- 5, 6, 7: Knoten
- 8, 9, 10, 11: Links
- 12: Navigationspfad
- 13: Startknoten
- 14: Anwahlmittel
- 15: Anzeigegerät
- 16: Gerätegruppe, Gerät, Geräteteil
- 17: Auslesemittel
- 18: Geräteparameter
- 19: Ansteuermittel
- 20: Zeiger
- 21: Eingabemittel
- 22: Informationseingang
- 23: Identifikationseinrichtung
- 24: Navigationspfadberechnungseinrichtung
- 25: Knotenauswahleinrichtung
- 26: Informationsausgabeeinrichtung
- 27: Ansteuerungseinrichtung

## Patentansprüche

1. Verfahren zur Anzeige einer Geräteinformation (2) in einem Navigationsbaum (4), wobei der Navigationsbaum (4) Knoten (5, 6, 7) aufweist, die durch gerichtete Links (8, 9, 10, 11) miteinander verknüpft sind, wobei durch die gerichteten Links (8, 9, 10, 11) eine Ordnungsstruktur definiert ist, welche zu jedem Knoten (5, 6, 7) übergeordnete Knoten (5, 6, 7) und untergeordnete Knoten (5, 6, 7) auszeichnet, wobei durch die Ordnungsstruktur zu jedem Knoten (5, 6, 7) ein zugeordneter Navigationspfad (12) definiert ist, welcher alle übergeordneten Knoten (5, 6, 7) zu diesem Knoten (5, 6, 7) und die jeweils verknüpfenden Links (8, 9, 10, 11) enthält, wobei der Navigationsbaum (4) einen Startknoten (13) aufweist, zu welchem kein übergeordneter Knoten existiert und zu welchem die übrigen Knoten (5, 6, 7) des Navigationsbaums (4) untergeordnet sind und wobei jedem Knoten (5, 6, 7) ein Geräteteil, ein Gerät oder eine Gerätegruppe (16) einer Anlage zugeordnet ist, die jeweils Geräteinformationen (2) absetzen,
wobei die Anlage eine Fertigungsanlage, eine Reinigungsanlage, eine Sortieranlage, eine Förderanlage, eine Verarbeitungsanlage oder eine sonstige industrielle Anlage mit Antriebstechnik und/oder mit elektronischen Mess-, Steuer- und/oder Regeleinheiten ist, wobei die Geräteinformationen (2) wenigstens eine Fehlermeldung, eine Befehlsbestätigung oder eine Statusänderungsmeldung umfassen, und wobei ein Knoten (5, 6, 7) als angewählter Knoten (5, 6, 7) mit dem zugehörigen Navigationspfad als erster Navigationspfad (12) und den zu dem Knoten direkt untergeordneten Knoten (5, 6, 7) an einem Anzeigegerät (15) darstellbar ist, wobei ein Knoten (5, 6, 7) mit einem Anwahlmittel (14) angewählt und als angewählter Knoten (5, 6, 7) mit dem zugehörigen ersten Navigationspfad (12) und den zu dem Knoten (5, 6, 7) direkt untergeordneten Knoten (5, 6, 7) am Anzeigegerät (15) dargestellt wird, **dadurch gekennzeichnet dass** zu einer von einem Geräteteil, einem Gerät oder einer Gerätegruppe (16) abgesetzten Geräteinformation (2) automatisch der zugehörige Knoten (5, 6, 7) identifiziert wird, dass zu dem identifizierten Knoten (5, 6, 7) ein zugehöriger Navigationspfad als zweiter Navigationspfad automatisch ermittelt wird, der den identifizierten Knoten (5, 6, 7) mit dem Startknoten (13) des ersten Navigationspfad verbindet, wobei der zweite Navigationspfad dadurch ermittelt wird, dass rekursiv ein jeweils direkt übergeordneter Knoten (5, 6, 7) automatisch aufgesucht und als Element des zweiten Navigationspfads notiert wird, dass ein Knoten (5, 6, 7) in dem zweiten Navigationspfad automatisch ermittelt wird, welcher momentan am Anzeigegerät (15) dargestellt ist, wobei als ermittelter Knoten (5, 6, 7) derjenige Knoten (5, 6, 7) des zweiten Navigationspfads ermittelt wird, zu welchem kein untergeordneter Knoten (5, 6, 7) im zweiten Navigationspfad momentan dargestellt wird, und dass die Geräteinformation (2) durch eine Informationsausgabeeinrichtung (26) automatisch an der bisher dargestellten Stelle gelöscht und einem neu ermittelten Knoten (5, 6, 7) zugeordnet am Anzeigegerät (15) angezeigt wird, wobei bei einem Wechsel des angewählten Knotens (5, 6, 7) am Anzeigegerät erneut ein Knoten (5, 6, 7) in dem zweiten Navigationspfad (12) automatisch ermittelt wird, welcher momentan am Anzeigegerät (15) dargestellt ist,
und wobei die Geräteinformation (2) automatisch an dem erneut ermittelten Knoten (5, 6, 7) am Anzeigegerät (15) dargestellt wird.

2. Verfahren nach Anspruch 1, **dadurch gekennzeichnet, dass** jeder Knoten (5, 6, 7) genau oder höchstens einen direkt übergeordneten Knoten (5, 6, 7) im Navigationsbaum (4) hat.

3. Verfahren nach einem der vorangehenden Ansprüche, **dadurch gekennzeichnet, dass** die Geräteinformation (2) an einem Link (8, 9, 10, 11) zu einem Knoten (5, 6, 7), der zu dem ermittelten Knoten (5, 6, 7) direkt übergeordnet ist, und/oder an dem ermittelten Knoten (5, 6, 7) angezeigt wird.

4. Verfahren nach einem der vorangehenden Ansprüche, **dadurch gekennzeichnet, dass** mit dem angewählten Knoten (5, 6, 7) vorzugsweise grafische Auslesemittel (17) zu einem Auslesen von Geräteparametern (18) von dem/der zugeordneten Geräteteil, Gerät oder Gerätegruppe (16) und/oder vorzugsweise grafische Ansteuermittel (19) zu einem Ansteuern des/der zugeordneten Geräteteils, Gerätes oder Gerätegruppe (16) angezeigt werden und/oder dass zu jedem dargestellten, nicht angewählten Knoten (5, 6, 7) höchstens zwei direkt unter- oder übergeordnete Knoten (5, 6, 7) dargestellt werden.

5. Anzeigevorrichtung (1) für Geräteinformationen (2), mit einer Speichereinrichtung (3), in welcher ein Navigationsbaum (4) hinterlegt ist, wobei der Navigationsbaum (4) Knoten (5, 6, 7) aufweist, die durch gerichtete Links (8, 9, 10, 11) miteinander verknüpft sind, wobei durch die gerichteten Links (8, 9, 10, 11) eine Ordnungsstruktur definiert ist, welche zu jedem Knoten (5, 6, 7) übergeordnete Knoten (5, 6, 7) und untergeordnete Knoten auszeichnet, wobei durch die Ordnungsstruktur zu jedem Knoten (5, 6, 7) ein zugeordneter Navigationspfad (12) definiert ist, welcher alle übergeordneten Knoten (5, 6, 7) zu diesem Knoten (5, 6, 7) und die jeweils verknüpfenden Links (8, 9, 10, 11) enthält, wobei der Navigationsbaum (4) einen Startknoten (13) aufweist, zu welchem kein übergeordneter Knoten existiert und zu welchem die übrigen Knoten (5, 6, 7) des Navigationsbaums (4) untergeordnet sind und wobei jedem Knoten (5, 6, 7) ein Geräteteil, ein Gerät oder eine Gerätegruppe (16) einer Anlage zugeordnet ist, die jeweils Geräteinformationen (2) absetzen,
wobei die Anlage eine Fertigungsanlage, eine Reinigungsanlage, eine Sortieranlage, eine Förderanlage, eine Verarbeitungsanlage oder eine sonstige industrielle Anlage mit Antriebstechnik und/oder mit elektronischen Mess-, Steuer- und/oder Regeleinheiten ist, wobei die Geräteinformationen (2) wenigstens eine Fehlermeldung, eine Befehlsbestätigung oder eine Statusänderungsmeldung umfassen, und wobei ein Anwahlmittel (14) zu einem
Anwählen eines an der Anzeigevorrichtung (1) angezeigten Knotens (5, 6, 7) eingerichtet ist und die Anzeigevorrichtung (1) zur Anzeige eines angewählten Knotens (5, 6, 7) des Navigationsbaums (4) mit dem zugehörigen Navigationspfad als erster Navigationspfad (12) und den zu dem Knoten (5, 6, 7) direkt untergeordneten Knoten (5, 6, 7) eingerichtet ist, **dadurch gekennzeichnet,**
**dass** ein Informationseingang (22) ausgebildet ist, über welchen abgesetzte Geräteinformationen (2) von dem Geräteteil, dem Gerät oder der Gerätegruppe (16) empfangbar sind, dass eine Identifikationseinrichtung (23) zur Identifizierung eines zu einer empfangenen Geräteinformation (2) zugeordneten Knotens (5, 6, 7) eingerichtet ist, dass eine Navigationspfadberechnungseinrichtung (24) zur Ermittlung des Navigationspfads zu einem identifizierten Knoten (5, 6, 7) als zweiter Navigationspfad eingerichtet ist, der den identifizierten Knoten (5, 6, 7) mit dem Startknoten (13) des ersten Navigationspfad verbindet, wobei die Navigationspfadberechnungseinrichtung (25) ausgehend von dem identifizierten Knoten (6) zu einer rekursiven automatischen Ermittlung eines zu einem Knoten (5, 6, 7) jeweils direkt übergeordneten Knotens (5, 6, 7) und zu einer Notierung des übergeordneten Knotens (5, 6, 7) als Element des zweiten Navigationspfads eingerichtet ist, dass eine Knotenauswahleinrichtung (25) zur Ermittlung eines Knotens (5, 6, 7) im zweiten Navigationspfad zu dem identifizierten Knoten (5, 6, 7), der gleichzeitig auch momentan am Anzeigegerät (15) dargestellt ist, wobei als ermittelter Knoten (5, 6, 7) derjenige Knoten (5, 6, 7) des zweiten Navigationspfads ermittelt wird, zu welchem kein untergeordneter Knoten (5, 6, 7) im zweiten Navigationspfad momentan dargestellt wird, eingerichtet ist und dass eine Informationsausgabeeinrichtung (26) zum Löschen der Geräteinformation (2) an der bisher dargestellten Stelle und zur Anzeige der Geräteinformation (2) mit dem ermittelten Knoten (5, 6, 7) am Anzeigegerät (15) eingerichtet ist,
wobei die Anzeigevorrichtung (1) zur erneuten automatischen Ermittlung eines momentan am Anzeigegerät (15) dargestellten Knotens (5, 6, 7) im Navigationspfad (12) des identifizierten Knotens (5, 6, 7) bei einem Wechsel des angewählten Knotens (5, 6, 7) am Anzeigegerät (15)
und zu einer dem erneut ermittelten Knoten (5, 6, 7) zugeordneten Darstellung der Geräteinformation (2) eingerichtet ist,
und wobei die Anzeigevorrichtung (1) zur automatischen Darstellung der Geräteinformation (2) an dem neu ermittelten Knoten (5, 6, 7) eingerichtet ist.

6. Anzeigevorrichtung (1) nach Anspruch 5, **dadurch gekennzeichnet, dass** jeder Knoten (5, 6, 7) genau oder höchstens einen direkt übergeordneten Knoten (5, 6, 7) im Navigationsbaum (4) hat.

7. Anzeigevorrichtung (1) nach einem der vorangehenden Ansprüche 5 bis 6, **dadurch gekennzeichnet, dass**
die Anzeigevorrichtung (1) zur Darstellung der Geräteinformation (2) an einem Link (8, 9, 10, 11) zu einem Knoten (5, 6, 7), der zu dem ermittelten Knoten (5, 6, 7) direkt übergeordnet ist, eingerichtet ist.

8. Anzeigevorrichtung (1) nach einem der vorangehenden Ansprüche 5 bis 7, **dadurch gekennzeichnet, dass** der Navigationsbaum (4) einen Startknoten (13) aufweist, zu welchem kein übergeordneter Knoten (5, 6, 7) existiert und zu welchem die übrigen Knoten (5, 6, 7) des Navigationsbaums (4) untergeordnet sind und/oder dass die Anzeigevorrichtung (1) zur Anzeige eines vorzugsweise grafischen Auslesemittels (17) zu einem Auslesen von Geräteparametern (18) von dem/der zugeordneten Geräteteil, Gerät oder Gerätegruppe (16) mit dem angewählten Knoten (5, 6, 7) und/oder zur Anzeige eines vorzugsweise grafischen Ansteuermittels (19) zu einem Ansteuern des/der zugeordneten Geräteteil, Gerät oder Gerätegruppe (16) eingerichtet ist.

9. Anzeigevorrichtung (1) nach einem der vorangehenden Ansprüche 5 bis 8, **dadurch gekennzeichnet, dass** die Anzeigevorrichtung (1) zur Darstellung von höchstens zwei direkt unter- oder übergeordneten Knoten (5, 6, 7) zu jedem dargestellten, nicht angewählten Knoten (5, 6, 7) eingerichtet ist.

10. Anzeigevorrichtung (1) nach einem der vorangehenden Ansprüche 5 bis 9, **dadurch gekennzeichnet, dass** Mittel zum Ausführen eines Verfahrens nach einem der Ansprüche 2 bis 4 ausgebildet sind.

## Claims

1. Method for displaying an item of device information (2) in a navigation tree (4), wherein the navigation tree (4) has nodes (5, 6, 7) interlinked by directional links (8, 9, 10, 11), wherein an order structure is defined by the directional links (8, 9, 10, 11) and highlights superordinate nodes (5, 6, 7) and subordinate nodes (5, 6, 7) for each node (5, 6, 7), wherein an associated navigation path (12) is defined by the order structure for each node (5, 6, 7) and contains all the superordinate nodes (5, 6, 7) for that node (5, 6, 7) and the respective linking links (8, 9, 10, 11), wherein the navigation tree (4) has a start node (13), for which no superordinate node exists and to which the other nodes (5, 6, 7) of the navigation tree (4) are subordinate, and wherein each node (5, 6, 7) is associated with a device part, a device or a device group (16) of a plant, each of which transmits device information (2),
wherein the plant is a production plant, a purification plant, a sorting plant, a handling plant, a processing plant or any other industrial plant comprising drive technology and/or electronic measurement units and/or open-loop and/or closed-loop control units, wherein the device information (2) includes at least one error message, command confirmation or status change message, and wherein a node (5, 6, 7) can be shown on a display device (15) as a selected node (5, 6, 7) together with the associated navigation path as the first navigation path (12) and the nodes (5, 6, 7) directly subordinate to the node, wherein a node (5, 6, 7) is selected using a selection means (14) and is shown as a selected node (5, 6, 7) together with the associated first navigation path (12) and the nodes (5, 6, 7) directly subordinate to the node (5, 6, 7), **characterised in that** the associated node (5, 6, 7) for an item of device information (2) transmitted by a device part, a device or a device group (16) is automatically identified, **in that** an associated navigation path for the identified node (5, 6, 7) is automatically established as a second navigation path, which connects the identified node (5, 6, 7) to the start node (13) of the first navigation path, wherein the second navigation path is established by automatically and recursively searching for a respective directly superordinate node (5, 6, 7) and noting this node as an element of the second navigation path, **in that** a node (5, 6, 7), currently being shown on the display device (15), in the second navigation path is automatically established, wherein the node (5, 6, 7) of the second navigation path for which no subordinate node (5, 6, 7) is currently being shown in the second navigation path is established as the established node (5, 6, 7), and **in that** the device information (2) is automatically deleted at the previously shown site by an information output system (26) and is displayed on the display device (15) in a manner associated with a newly established node (5, 6, 7), wherein, if the selected node (5, 6, 7) on the display device changes, a node (5, 6, 7), currently being shown on the display device (15), in the second navigation path (12) is automatically re-established,
and wherein the device information (2) is automatically shown on the display device (15) at the re-established node (5, 6, 7).

2. Method according to claim 1, **characterised in that** each node (5, 6, 7) has precisely or at most one directly superordinate node (5, 6, 7) in the navigation tree (4).

3. Method according to any of the preceding claims, **characterised in that** the device information (2) is displayed at a link (8, 9, 10, 11) to a node (5, 6, 7) that is directly superordinate to the established node (5, 6, 7), and/or at the established node (5, 6, 7).

4. Method according to any of the preceding claims, **characterised in that**, together with the selected node (5, 6, 7), preferably graphical readout means (17) for reading out device parameters (18) of the associated device part, device or device group (16) and/or preferably graphical actuation means (19) for actuating the associated device part, device or device group (16) are displayed and/or **in that** at most two directly subordinate or superordinate nodes (5, 6, 7) are shown for each shown, unselected node (5, 6, 7).

5. Display apparatus (1) for device information (2), comprising a storage system (3) in which a navigation tree (4) is stored, wherein the navigation tree (4) has nodes (5, 6, 7) interlinked by directional links (8, 9, 10, 11), wherein an order structure is defined by the directional links (8, 9, 10, 11) and highlights superordinate nodes (5, 6, 7) and subordinate nodes for each node (5, 6, 7), wherein an associated navigation path (12) is defined by the order structure for each node (5, 6, 7) and contains all the superordinate nodes (5, 6, 7) for that node (5, 6, 7) and the respective linking links (8, 9, 10, 11), wherein the navigation tree (4) has a start node (13), for which no superordinate node exists and to which the other nodes (5, 6, 7) of the navigation tree (4) are subordinate, and wherein each node (5, 6, 7) is associated with a device part, a device or a device group (16) of a plant, each of which transmits device information (2),
wherein the plant is a production plant, a purification plant, a sorting plant, a handling plant, a processing plant or any other industrial plant comprising drive technology and/or electronic measurement units and/or open-loop and/or closed-loop control units, wherein the device information (2) includes at least one error message, command confirmation or status change message, and wherein a selection means (14) is configured to select a node (5, 6, 7) displayed on the display apparatus (1), and the display apparatus (1) is configured to display a selected node (5, 6, 7) of the navigation tree (4) together with the associated navigation path as the first navigation path (12) and the nodes (5, 6, 7) that are directly subordinate to the node (5, 6, 7),
**characterised in that**
an information input (22) is formed, by means of which transmitted device information (2) can be received from the device part, device or device group (16), **in that** an identification system (23) is configured to identify a node (5, 6, 7) associated with an item of received device information (2), **in that** a navigation path calculation system (24) is configured to establish the navigation path for an identified node (5, 6, 7) as a second navigation path, which connects the identified node (5, 6, 7) to the start node (13) of the first navigation path, wherein the navigation path calculation system (25) is configured, starting from the identified node (6), to recursively and automatically establish a node (5, 6, 7) that is directly superordinate to a node (5, 6, 7) and to note the superordinate node (5, 6, 7) as an element of the second navigation path, **in that** a node selection system (25) is configured to establish a node (5, 6, 7) in the second navigation path for the identified node (5, 6, 7) that is simultaneously also currently being shown on the display device (15), wherein the node (5, 6, 7) of the second navigation path for which no subordinate node (5, 6, 7) is currently being shown in the second navigation path is established as the established node (5, 6, 7), and **in that** an information output system (26) is configured to delete the device information (2) at the previously shown site and to display the device information (2) on the display device (15) together with the established node (5, 6, 7),
wherein the display apparatus (1) is configured to automatically re-establish a node (5, 6, 7), currently being shown on the display device (15), in the navigation path (12) of the identified node (5, 6, 7) if the selected node (5, 6, 7) on the display device (15) changes, and to show the device information (2) in a manner associated with the re-established node (5, 6, 7), and wherein the display apparatus (1) is configured to automatically show the device information (2) at the newly established node (5, 6, 7).

6. Display apparatus (1) according to claim 5, **characterised in that** each node (5, 6, 7) has precisely or at most one directly superordinate node (5, 6, 7) in the navigation tree (4).

7. Display apparatus (1) according to any of preceding claims 5 to 6, **characterised in that** the display apparatus (1) is configured to show the device information (2) at a link (8, 9, 10, 11) to a node (5, 6, 7) that is directly superordinate to the established node (5, 6, 7).

8. Display apparatus (1) according to any of preceding claims 5 to 7, **characterised in that** the navigation tree (4) has a start node (13), for which no superordinate node (5, 6, 7) exists and to which the other nodes (5, 6, 7) of the navigation tree (4) are subordinate and/or in that the display apparatus (1) is configured to display a preferably graphical readout means (17) for reading out device parameters (18) of the associated device part, device or device group (16) together with the selected node (5, 6, 7) and/or to display a preferably graphical actuation means (19) for actuating the associated device part, device or device group (16).

9. Display apparatus (1) according to any of preceding claims 5 to 8, **characterised in that** the display apparatus (1) is configured to show at most two directly subordinate or superordinate nodes (5, 6, 7) for each shown, unselected node (5, 6, 7).

10. Display apparatus (1) according to any of preceding claims 5 to 9, **characterised in that** means are formed for carrying out a method according to any of claims 2 to 4.

## Revendications

1. Procédé d'affichage d'une information d'appareillage (2) dans une arborescence de navigation (4), ladite arborescence de navigation (4) comportant des points nodaux (5, 6, 7) combinés les uns aux autres par des liens orientés (8, 9, 10, 11), lesquels liens orientés (8, 9, 10, 11) ont pour effet de définir une structure d'ordonnancement qui caractérise des points nodaux (5, 6, 7) de niveau supérieur et des points nodaux (5, 6, 7) subordonnés, en rapport avec chaque point nodal (5, 6, 7), ladite structure d'ordonnancement définissant alors un chemin de navigation (12) qui est affecté à chaque point nodal (5, 6, 7) et qui contient tous les points nodaux (5, 6, 7) de niveau supérieur à celui de ce point nodal (5, 6, 7), et les liens (8, 9, 10, 11) assurant respectivement une combinaison, l'arborescence de navigation (4) étant pourvue d'un point nodal de départ (13) en rapport avec lequel il n'existe aucun point nodal de niveau supérieur, et auquel les points nodaux restants (5, 6, 7) de ladite arborescence de navigation (4) sont subordonnés, sachant qu'une partie d'appareil, un appareil ou un groupe d'appareils (16) d'une installation, fournissant à chaque fois des informations d'appareillage (2), est (sont) affecté(e)(s) à chaque point nodal (5, 6, 7),
ladite installation étant une installation de production, une installation de nettoyage, une installation de triage, une installation de convoyage, une installation de transformation ou une installation industrielle de type autre, équipée d'une technologie d'entraînement et/ou d'unités électroniques de mesure, de commande et/ou de régulation, sachant que les informations d'appareillage (2) incluent au moins un message d'erreur, une confirmation d'instruction ou un message de modification de statut, et sachant qu'un point nodal (5, 6, 7) peut être visualisé sur un appareil d'affichage (15) en tant que point nodal (5, 6, 7) sélectionné, conjointement au chemin de navigation associé constituant un premier chemin de navigation (12), et aux points nodaux (5, 6, 7) directement subordonnés audit point nodal, un point nodal (5, 6, 7) étant sélectionné à l'aide d'un moyen de sélection (14) et étant visualisé sur ledit appareil d'affichage (15), en tant que point nodal (5, 6, 7) sélectionné, conjointement audit premier chemin de navigation (12) associé, et auxdits points nodaux (5, 6, 7) directement subordonnés audit point nodal (5, 6, 7), **caractérisé par le fait qu'**en rapport avec une information d'appareillage (2), fournie par une partie d'appareil, un appareil ou un groupe d'appareils (16), le point nodal (5, 6, 7) associé est identifié automatiquement ; **par le fait qu'**il s'opère, en rapport avec ledit point nodal (5, 6, 7) identifié, une spécification automatique d'un chemin de navigation associé constituant un second chemin de navigation et reliant ledit point nodal (5, 6, 7) identifié au point nodal de départ (13) du premier chemin de navigation, le second chemin de navigation étant spécifié du fait qu'un point nodal respectif (5, 6, 7) de niveau directement supérieur est recherché automatiquement, en mode récurrent, puis coté en tant qu'élément dudit second chemin de navigation ; **par le fait qu'**un point nodal (5, 6, 7) momentanément visualisé sur l'appareil d'affichage (15) est spécifié automatiquement dans le second chemin de navigation, sachant que le point nodal (5, 6, 7) spécifié se présente comme le point nodal (5, 6, 7) dudit second chemin de navigation en rapport avec lequel aucun point nodal (5, 6, 7) subordonné n'est momentanément visualisé, dans ledit second chemin de navigation ; et **par le fait que** l'information d'appareillage (2) est automatiquement effacée dans la zone visualisée jusque-là, par un dispositif (26) de délivrance d'informations, puis affichée sur l'appareil d'affichage (15) en étant affectée à un point nodal (5, 6, 7) spécifié de nouveau, sachant qu'il s'opère de nouveau dans ledit second chemin de navigation (12), lors d'une modification du point nodal (5, 6, 7) sélectionné, sur l'appareil d'affichage, une spécification automatique d'un point nodal (5, 6, 7) momentanément visualisé sur ledit appareil d'affichage (15),
et sachant que ladite information d'appareillage (2) est automatiquement visualisée, sur ledit appareil d'affichage (15), au niveau dudit point nodal (5, 6, 7) spécifié de nouveau.

2. Procédé selon la revendication 1, **caractérisé par le fait que** chaque point nodal (5, 6, 7) présente, dans l'arborescence de navigation (4), exactement ou au maximum un point nodal (5, 6, 7) de niveau directement supérieur.

3. Procédé selon l'une des revendications précédentes, **caractérisé par le fait que** l'information d'appareillage (2) est affichée sur un lien (8, 9, 10, 11) avec un point nodal (5, 6, 7) de niveau directement supérieur à celui du point nodal (5, 6, 7) spécifié, et/ou au niveau dudit point nodal (5, 6, 7) spécifié.

4. Procédé selon l'une des revendications précédentes, **caractérisé par le fait que** des moyens de lecture (17) préférentiellement graphiques, dévolus à une lecture de paramètres d'appareillage (18) de la partie d'appareil, de l'appareil ou du groupe d'appareils (16) associé(e) et/ou des moyens de pilotage (19) préférentiellement graphiques, dévolus à un pilotage de ladite partie d'appareil, dudit appareil ou dudit groupe d'appareils (16) associé(e), sont affichés avec le point nodal (5, 6, 7) sélectionné ; et/ou **par le fait que** des points nodaux (5, 6, 7) directement subordonnés ou directement de niveau supérieur, au nombre de deux au maximum, sont visualisés en rapport avec chaque point nodal visualisé (5, 6, 7) non sélectionné.

5. Dispositif d'affichage (1) destiné à des informations d'appareillage (2), équipé d'un dispositif de mémorisation (3) dans lequel une arborescence de navigation (4) est stockée, ladite arborescence de navigation (4) comportant des points nodaux (5, 6, 7) combinés les uns aux autres par des liens orientés (8, 9, 10, 11), lesdits liens orientés (8, 9, 10, 11) ayant pour effet de définir une structure d'ordonnancement qui caractérise des points nodaux (5, 6, 7) de niveau supérieur et des points nodaux subordonnés, en rapport avec chaque point nodal (5, 6, 7), ladite structure d'ordonnancement définissant alors un chemin de navigation (12) qui est affecté à chaque point nodal (5, 6, 7) et qui contient tous les points nodaux (5, 6, 7) de niveau supérieur à celui de ce point nodal (5, 6, 7), et les liens (8, 9, 10, 11) assurant respectivement une combinaison, l'arborescence de navigation (4) étant munie d'un point nodal de départ (13) en rapport avec lequel il n'existe aucun point nodal de niveau supérieur, et auquel les points nodaux restants (5, 6, 7) de ladite arborescence de navigation (4) sont subordonnés, sachant qu'une partie d'appareil, un appareil ou un groupe d'appareils (16) d'une installation, fournissant à chaque fois des informations d'appareillage (2), est (sont) affecté(e)(s) à chaque point nodal (5, 6, 7),
ladite installation étant une installation de production, une installation de nettoyage, une installation de triage, une installation de convoyage, une installation de transformation ou une installation industrielle de type autre, dotée d'une technologie d'entraînement et/ou d'unités électroniques de mesure, de commande et/ou de régulation,
sachant que les informations d'appareillage (2) incluent au moins un message d'erreur, une confirmation d'instruction ou un message de modification de statut,
sachant que les informations d'appareillage (2) incluent au moins un message d'erreur, une confirmation d'instruction ou un message de modification de statut,
et sachant qu'un moyen de sélection (14) est agencé en vue de sélectionner un point nodal (5, 6, 7) affiché sur ledit dispositif d'affichage (1), et que ledit dispositif d'affichage (1) est agencé en vue d'afficher un point nodal sélectionné (5, 6, 7) de l'arborescence de navigation (4) conjointement au chemin de navigation associé, constituant un premier chemin de navigation (12), et aux points nodaux (5, 6, 7) directement subordonnés audit point nodal (5, 6, 7),
**caractérisé par**
la présence d'une entrée (22) d'informations, par l'intermédiaire de laquelle il est possible de recevoir des informations d'appareillage (2) fournies, émanant de la partie d'appareil, de l'appareil ou du groupe d'appareils (16) ; par le fait qu'un dispositif d'identification (23) est agencé en vue d'identifier un point nodal (5, 6, 7) affecté à une information d'appareillage (2) reçue ; par le fait qu'un dispositif (24) de calcul de chemins de navigation est agencé en vue de spécifier le chemin de navigation vers un point nodal (5, 6, 7) identifié, qui constitue un second chemin de navigation et qui relie ledit point nodal (5, 6, 7) identifié au point nodal de départ (13) du premier chemin de navigation, sachant que, sur la base du point nodal (6) identifié, ledit dispositif (24) de calcul de chemins de navigation est agencé en vue de spécifier automatiquement, en mode récurrent, un point nodal respectif (5, 6, 7) de niveau directement supérieur à celui d'un point nodal (5, 6, 7), et en vue de coter ledit point nodal (5, 6, 7) de niveau supérieur, en tant qu'élément dudit second chemin de navigation ; par le fait qu'un dispositif (25) de sélection de points nodaux est agencé en vue de spécifier, dans le second chemin de navigation vers un point nodal (5, 6, 7) identifié, un point nodal (5, 6, 7) qui est, lui aussi, momentanément visualisé dans le même temps sur l'appareil d'affichage (15), sachant que le point nodal (5, 6, 7) spécifié se présente comme le point nodal (5, 6, 7) dudit second chemin de navigation en rapport avec lequel aucun point nodal (5, 6, 7) subordonné n'est momentanément visualisé, dans ledit second chemin de navigation ; et par le fait qu'un dispositif (26) de délivrance d'informations est agencé en vue d'effacer l'information d'appareillage (2) dans la zone visualisée jusque-là, et d'afficher ladite information d'appareillage (2) sur ledit appareil d'affichage (15), avec ledit point nodal (5, 6, 7) spécifié,
sachant que le dispositif d'affichage (1) est agencé en vue de la spécification automatique réitérée d'un point nodal (5, 6, 7) momentanément visualisé sur l'appareil d'affichage (15) dans le chemin de navigation (12) du point nodal (5, 6, 7) identifié, lors d'une modification du point nodal (5, 6, 7) sélectionné, sur ledit appareil d'affichage (15),
et en vue d'une visualisation de l'information d'appareillage (2) affectée audit point nodal (5, 6, 7) spécifié de nouveau,
et sachant que ledit dispositif d'affichage (1) est agencé en vue de la visualisation automatique de ladite information d'appareillage (2) au niveau dudit point nodal (5, 6, 7) spécifié de nouveau.

6. Dispositif d'affichage (1) selon la revendication 5, **caractérisé par le fait que** chaque point nodal (5, 6, 7) présente, dans l'arborescence de navigation (4), exactement ou au maximum un point nodal (5, 6, 7) de niveau directement supérieur.

7. Dispositif d'affichage (1) selon l'une des revendications 5 à 6 précédentes, **caractérisé par le fait que** ledit dispositif d'affichage (1) est agencé en vue de la visualisation de l'information d'appareillage (2) sur un lien (8, 9, 10, 11) avec un point nodal (5, 6, 7) de niveau directement supérieur à celui du point nodal (5, 6, 7) spécifié.

8. Dispositif d'affichage (1) selon l'une des revendications 5 à 7 précédentes, **caractérisé par le fait que** l'arborescence de navigation (4) présente un point nodal de départ (13) en rapport avec lequel il n'existe aucun point nodal (5, 6, 7) de niveau supérieur, et auquel les points nodaux restants (5, 6, 7) de ladite arborescence de navigation (4) sont subordonnés ; et/ou **par le fait que** ledit dispositif d'affichage (1) est agencé en vue d'afficher un moyen de lecture (17) préférentiellement graphique, dévolu à une lecture de paramètres d'appareillage (18) de la partie d'appareil, de l'appareil ou du groupe d'appareils (16) associé(e), avec le point nodal (5, 6, 7) sélectionné, et/ou en vue d'afficher un moyen de pilotage (19) préférentiellement graphique, dévolu à un pilotage de ladite partie d'appareil, dudit appareil ou dudit groupe d'appareils (16) associé(e).

9. Dispositif d'affichage (1) selon l'une des revendications 5 à 8 précédentes, **caractérisé par le fait que** ledit dispositif d'affichage (1) est agencé en vue de la visualisation de points nodaux (5, 6, 7) directement subordonnés ou directement de niveau supérieur, au nombre de deux au maximum, en rapport avec chaque point nodal visualisé (5, 6, 7) non sélectionné.

10. Dispositif d'affichage (1) selon l'une des revendications 5 à 9 précédentes, **caractérisé par le fait que** des moyens sont conçus pour la mise en œuvre d'un procédé conforme à l'une des revendications 2 à 4.
